# EUROPÄISCHE PATENTANMELDUNG

(11) **EP 2 383 066 A2**
(43) Veröffentlichungstag der Anmeldung: **02.11.2011**
(21) Anmeldenummer: 11003460.0
(22) Anmeldetag: 27.04.2011
(51) Int. Cl.: B23K 20/10, B29C 65/08

(54) **Sonotrodenhalterungssystem**

(30) Priorität: 27.04.2010 DE 102010018444
(71) Anmelder: Maschinenfabrik Spaichingen GmbH, 78549 Spaichingen (DE)
(72) Erfinder: Eder, Frank, 78549 Spaichingen (DE)
(74) Vertreter: Manitz, Finsterwald & Partner GbR

(57) **Zusammenfassung**

Es wird ein Sonotrodenhalterungssystem mit wenigstens einer an einem Träger abstützbaren allgemein U-förmigen Klammer angegeben, die einen Steg und zwei Schenkel umfasst, die jeweils um einen im Stegbereich vorgesehenen Knotenpunkt federnd kippbar sind und zwischen die eine Ultraschall-Sonotrode einspannbar ist. Bei eingespannter Sonotrode liegen zumindest die freien Enden der Schenkel an dieser Sonotrode an. Die Klammer ist im Stegbereich an dem Träger abstützbar, wobei sie bevorzugt im Knotenpunkt der Kippbewegungen an dem Träger abstützbar ist. Ein solches Sonotrodenhalterungssystem kann insbesondere zur Halterung des Schwinggebildes eines Ultraschallsystems vorgesehen sein, das Teil einer Vorrichtung zum Siegeln, Verbinden, Trennen, Perforieren und/oder Prägen von Materialien wie insbesondere Kunststoffen, Folien, Vliesen, Geweben/Textilien und/oder Papier ist.

## Beschreibung

Die Erfindung betrifft ein System zur Halterung eines eine Sonotrode umfassenden Schwinggebildes eines Ultraschallsystems und insbesondere ein Sonotrodenhalterungssystem. Sie betrifft ferner eine ein Ultraschallsystem mit einem solchen Sonotrodenhalterungssystem umfassende Vorrichtung zum Siegeln, Verbinden, Trennen, Perforieren und/oder Prägen von Materialien wie insbesondere Kunststoffen, Folien, Vliesen, Geweben/Textilien und/oder Papier.

Ultraschallsysteme mit wenigstens einem eine Sonotrode und einen Konverter aufweisenden Schwinggebilde, einem den Konverter anregenden Ultraschallgenerator sowie einem der Sonotrode gegenüberliegenden Amboss sind als solche bereits bekannt. Dabei erzeugt der Ultraschallgenerator eine Wechselspannung, die vom Konverter in der Regel nach dem piezoelektrischen Wandlerprinzip in eine mechanische Schwingung umgewandelt wird. Über das angekoppelte Schwinggebilde wird diese mechanische Schwingung auf die zu bearbeitenden Materialien übertragen. Soll beispielsweise eine Verbindung hergestellt werden, wird das zu verbindende Material an den Kontaktflächen durch das Zusammenspiel der physikalischen Gegebenheiten zwischen Amboss und Sonotrode, das heißt insbesondere Schallreflexion, Schallabsorption und Grenzflächenreibung plastifiziert, wodurch die betreffenden Materialien, insbesondere Kunststoffe, Folien, Vliese, Gewebe/Textilien und/oder Papier, miteinander verschweißt werden. Voraussetzung für das Verschweißen ist ein geringer Mindestanteil eines thermoplastischen Kunststoffes.

Das Schwinggebilde des Ultraschallsystems kann grundsätzlich auch ein zwischen dem Konverter und die Sonotrode geschaltetes Amplitudentransformationsstück umfassen. Die mit den zu bearbeitenden Materialien in Berührung kommende Kontaktfläche der Sonotrode kann insbesondere eben sein. In diesem Fall sind zum Beispiel die Schweißkonturen usw. am Amboss vorgesehen. Sonotrode und Amboss können aufeinander zu und voneinander weg bewegt werden. Es können auch mehrere Sonotroden bzw. Schwinggebilde nebeneinander angeordnet werden.

Bei einem aus der DE 20 2004 003 917 U1 bekannten System zur Halterung des Schwinggebildes eines Ultraschallsystems sind an der Sonotrode wenigstens vier Hilfsbooster angeordnet, die mit einem Ende jeweils fest mit der Sonotrode verbunden sind und deren anderes Ende jeweils schwingfähig und die Sonotrode abstützend in eine Öffnung eines Halters eingesetzt sind. Dabei können die Hilfsbooster an einem in diesen auftretenden Schwingungsknoten der im Schwinggebilde entstehenden Longitudinalschwingung am Halter abgestützt sein.

Der Erfindung liegt die Aufgabe zugrunde, ein Sonotrodensystem zu schaffen, das bei möglichst einfachem, robustem Aufbau eine zuverlässige, stabile Halterung des Schwinggebildes eines Ultraschallsystems ermöglicht. Zudem soll der Austausch eines jeweiligen Schwinggebildes oder von Teilen dieses Schwinggebildes aus einem Verbund erleichtert werden. Überdies soll eine entsprechend verbesserte Vorrichtung der eingangs genannten Art geschaffen werden.

Erfindungsgemäß wird diese Aufgabe gelöst durch ein Sonotrodenhalterungssystem mit wenigstens einer an einem Träger abstützbaren allgemein U-förmigen Klammer, die einen Steg und zwei Schenkel umfasst, die jeweils um einen im Stegbereich vorgesehenen Knotenpunkt federnd kippbar sind und zwischen die eine Ultraschall-Sonotrode einspannbar ist, wobei bei eingespannter Sonotrode zumindest die freien Enden der Schenkel an dieser Sonotrode anliegen und die Klammer im Stegbereich an dem Träger abstützbar ist.

Aufgrund dieser Ausbildung ergibt sich ein insgesamt sehr stabiler Aufbau des Halterungssystems, womit die Betriebssicherheit entsprechend erhöht wird. Die die Sonotrode bzw. das Schwinggebilde tragenden Teile können relativ massiv ausgelegt werden, wodurch eine robuste Halterung erreicht wird. Unter mechanischer Belastung treten allenfalls geringe Formänderungen der Klammer auf. Zudem ist aufgrund der erfindungsgemäßen Ausgestaltung nunmehr auch ein einfacheres Austauschen eines jeweiligen Schwinggebildes oder von Teilen dieses Schwinggebildes aus einem Verbund möglich.

Bevorzugt sind die freien Enden der Schenkel einer jeweiligen allgemein U-förmigen Kammer jeweils mit einer Kerbe versehen, in die bei eingespannter Sonotrode ein an der Sonotrode vorgesehener Ansatz eingreift. Dabei kann der Ansatz relativ klein und beispielsweise durch eine insbesondere kleine angefaste Fläche gebildet sein.

Alternativ können jedoch auch die freien Enden der Schenkel einer jeweiligen allgemein U-förmigen Klammern jeweils mit einem entsprechenden Ansatz versehen sein, der bei angespannter Sonotrode in eine entsprechende Kerbe der Sonotrode eingreift. Auch in diesem Fall ist der Ansatz vorzugsweise wieder relativ klein.

Die jeweils zusammenwirkenden Ansätze und Kerben sind bevorzugt so bemessen, dass die bei eingespannter Sonotrode insbesondere aufgrund von Transversalschwingungen der Sonotrode auftretenden Kippbewegungen der Schenkel um den Knotenpunkt nicht behindert werden.

Die Klammer ist bevorzugt im Knotenpunkt der Kippbewegungen an den Träger abstützbar.

Gemäß einer zweckmäßigen praktischen Ausgestaltung des erfindungsgemäßen Sonotrodenhalterungssystems sind im Stegbereich einer jeweiligen allgemein U-förmigen Klammer die Kippbewegungen der Schenkel unterstützende Aussparungen vorgesehen.

Von Vorteil ist insbesondere auch, wenn der Steg einer jeweiligen allgemein U-förmigen Klammer in zwei jeweils einem der beiden Schenkel zugeordnete Stegabschnitte unterteilt ist und die Stegabschnitte zur Bildung der U-förmigen Klammer insbesondere lösbar miteinander verbindbar, z.B. verschwenkbar sind.

In jedem Stegabschnitt kann jeweils eine die Kippbewegung des zugeordneten Schenkels unterstützende Aussparung vorgesehen sein.

Gemäß einer bevorzugten praktischen Ausführungsform des erfindungsgemäßen Sonotrodenhalterungssystems ist vorgesehen, dass die freien Enden der Schenkel einer jeweiligen allgemein U-förmigen Klammer im Schwingungsknoten der in der Sonotrode erzeugten Longitudinalschwingung an der Sonotrode an bzw. mit dieser in Eingriff treten.

Das erfindungsgemäße Sonotrodenhalterungssystem gewährleistet eine stabile Halterung des Schwingungsgebildes eines Ultraschallsystems. Dabei greift die Halterung bevorzugt im Schwingungsknoten der in der Sonotrode auftretenden Longitudinalschwingung an, wo sie verspannt werden kann. Die dort auftretende Querdehnungsbewegung der Sonotrode bedingt ein Mitbewegen der allgemein U-förmigen Klammer in Form einer Transversalschwingung. Durch eine entsprechende Formgebung der Halterung entsteht an deren Fuß, das heißt im Stegbereich der allgemein U-förmigen Klammer eine Kippbewegung. Die Klammer wird bevorzugt im Knotenpunkt dieser Kippbewegung am Träger, beispielsweise einer Trägerplatte abgestützt oder fixiert. Die Halterung wird also bevorzugt im Knotenpunkt einer Kippschwingung gelagert.

Erfindungsgemäß wird die zuvor genannte Aufgabe zudem gelöst durch eine Vorrichtung zum Siegeln, Verbinden, Trennen, Perforieren und/oder Prägen von Materialien wie insbesondere Kunststoffen, Folien, Vliesen, Geweben/Textilien und/oder Papier, mit einem Ultraschallsystems, das wenigstens ein eine Sonotrode und einen Konverter aufweisendes Schwinggebilde, einen den Konverter anregenden Ultraschallgenerator, einen der Sonotrode gegenüberliegenden Amboss sowie ein der Sonotrode zugeordnetes erfindungsgemäßes Sonotrodenhalterungssystem umfasst, wobei die freien Enden der Schenkel einer jeweiligen allgemein U-förmigen Klammer bevorzugt im Schwingungsknoten der in der Sonotrode erzeugten Longitudinalschwingung an der Sonotrode anliegen bzw. mit dieser in Eingriff treten.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform eines Ultraschallsystems,
- Fig. 2: eine schematische perspektivische Darstellung einer beispielhaften Ausführungsform eines erfindungsgemäßen Sonotrodenhalterungssystems und
- Fig. 3: eine schematische Querschnittsdarstellung des Sonotrodenhalterungssystems gemäß Fig. 2.

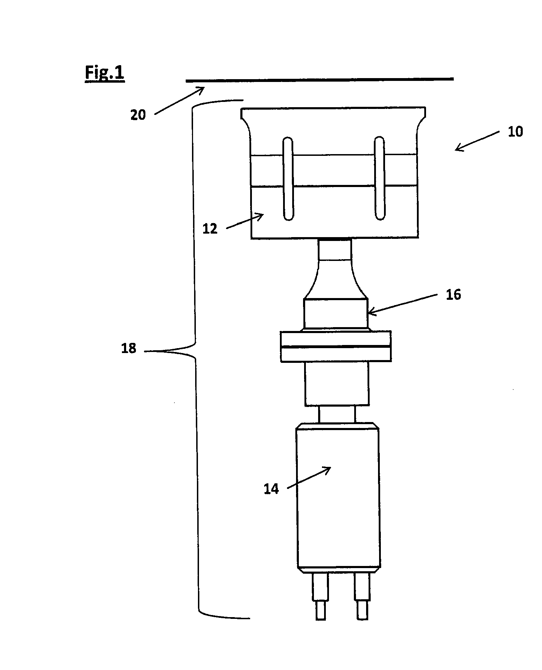

Fig. 1 zeigt in schematischer Darstellung eine beispielhafte Ausführungsform eines Ultraschallsystems 10 einer Vorrichtung zum Siegeln, Verbinden, Trennen, Perforieren und/oder Prägen von Materialien wie insbesondere Kunststoffen, Folien, Vliesen, Geweben/Textilien und/oder Papier, die unter anderem auch zur Herstellung von Verpackungen geeignet ist.

Das Ultraschallsystem 10 umfasst wenigstens ein eine Sonotrode 12, einen Konverter 14 und gegebenenfalls ein Amplitudentransformationsstück 16 aufweisendes Schwinggebilde 18, einen den Konverter 14 anregenden Ultraschallgenerator (nicht gezeigt) sowie einen der Sonotrode 12 gegenüberliegenden Amboss 20. Die Sonotrode 12 und der Amboss 20 können aufeinander zu und voneinander weg bewegt werden.

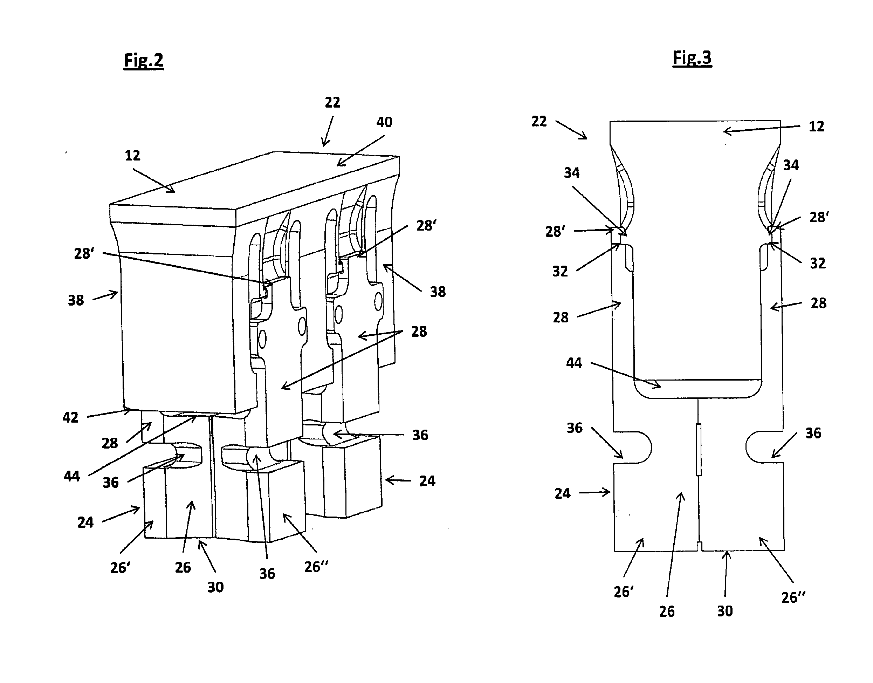

Fig. 2 zeigt in schematischer perspektivischer Darstellung eine beispielhafte Ausführungsform eines erfindungsgemäßen Sonotrodenhalterungssystems 22, das beispielsweise der Sonotrode 12 eines solchen Ultraschallsystems 10 zugeordnet sein kann, wie es in der Fig. 1 dargestellt ist.

Das Sonotrodenhalterungssystem 22 umfasst wenigstens eine an einem Träger (nicht gezeigt) abstützbare allgemein U-förmige Klammer 24 mit einem Steg 26 und zwei Schenkeln 28, die jeweils um einen im Bereich des Steges 26 vorgesehenen Knotenpunkt 30 federnd kippbar sind und zwischen die eine Ultraschall-Sonotrode 12 einspannbar ist, wobei bei eingespannter Sonotrode 12 zumindest die freien Enden 28' der Schenkel 28 an dieser Sonotrode 12 anliegen bzw. mit dieser in Eingriff treten und die Klammer 24 im Stegbereich an dem Träger abstützbar ist.

Wie anhand der Fig. 2 zu erkennen ist, sind im vorliegenden Fall zwei allgemein U-förmige Klammern 24 vorgesehen.

Die Sonotrode 12 kann eine allgemein quaderförmige, längliche Form besitzen, und die beiden Schenkel 28 einer jeweiligen Klammer 24 können sich bei zwischen diese eingespannter Sonotrode 12 auf den beiden einander gegenüberliegenden Längsseiten 38 der Sonotrode 12 allgemein senkrecht zur Sonotrodenlängsachse erstrecken. Dabei ist bei eingespannter Sonotrode 12 der Steg 26 der allgemein U-förmigen Klammer 24 auf der der mit den zu bearbeitenden Materialien in Berührung kommenden Kontaktseite 40 der Sonotrode 12 gegenüberliegenden Sonotrodenseite 42 angeordnet. Zwischen dieser der Kontaktseite 40 gegenüberliegenden Sonotrodenseite 42 und dem Steg 26 der Klammer 24 ist ein freier Zwischenraum 44 vorgesehen.

Wie insbesondere auch anhand der Fig. 3 zu erkennen ist, in der das Sonotrodenhalterungssystem 22 gemäß Fig. 2 in einer schematischen Querschnittsdarstellung wiedergegeben ist, sind im vorliegenden Fall die freien Enden 28' der Schenkel 28 einer jeweiligen allgemein U-förmigen Klammer 24 beispielsweise jeweils mit einer Kerbe 32 versehen, in die bei eingespannter Sonotrode 12 ein an der Sonotrode 12 vorgesehener Ansatz 34 eingreift.

Grundsätzlich ist jedoch beispielsweise auch eine solche Ausführung denkbar, bei der die freien Enden 28' der Schenkel 28 einer jeweiligen allgemein U-förmigen Klammer 24 jeweils mit einem Ansatz versehen sind, der bei eingespannter Sonotrode 12 in eine Kerbe der Sonotrode 12 eingreift.

Die jeweils zusammenwirkenden Ansätze 34 und Kerben 32 sind so bemessen, dass die bei eingespannter Sonotrode 12 auftretenden Kippbewegungen der Schenkel 28 um den Knotenpunkt 30 nicht behindert werden.

Eine jeweilige allgemein U-förmige Klammer 24 ist bevorzugt im Knotenpunkt 30 der Kippbewegungen gelagert bzw. an dem Träger abgestützt.

Im Steg 26 einer jeweiligen allgemein U-förmigen Klammer 24 sind die Kippbewegungen der Schenkel 28 unterstützende Aussparungen 36 vorgesehen. Wie in den Fig. 2 und 3 erkennbar, können diese Aussparungen 36 insbesondere von einander gegenüberliegenden Seiten des Stegs 26 her eingebracht sein und sich jeweils parallel zur Sonotrodenlängsrichtung erstrecken.

Der Steg 26 einer jeweiligen allgemein U-förmigen Klammer 24 kann in zwei jeweils einem der beiden Schenkel 28 zugeordnete Stegabschnitte 26', 26" unterteilt sein, die zur Bildung der U-förmigen Klammer 24 bzw. deren Stegs 26 insbesondere lösbar miteinander verbindbar sind. Dabei können diese Stegabschnitte 26', 26" beispielsweise miteinander verschraubt werden. Wie anhand der Fig. 2 und 3 zu erkennen ist, ist in jedem Stegabschnitt 26' 26" jeweils eine die Kippbewegung des zugeordneten Schenkels 28 unterstützende Aussparung 36 vorgesehen.

Die freien Enden 28' der Schenkel 28 einer jeweiligen allgemein U-förmigen Klammer 24 greifen bevorzugt im Schwingungsknoten der in der Sonotrode 12 erzeugten Longitudinalschwingung an der Sonotrode 12 an. Im vorliegenden Fall treten also die Ansätze 34 und Kerben 32 im Schwingunsknoten der in der Sonotrode 12 erzeugten Longitudinalschwingung miteinander in Eingriff.

Wie anhand der Fig. 2 und 3 zu erkennen ist, können die den Steg 26 einer jeweiligen allgemein U-förmigen Klammer 24 bildenden Stegabschnitte 26', 26" jeweils als sich an das betreffende Ende des zugeordneten Schenkels 28 anschließender sockelartiger Fuß ausgeführt sein. Der Knotenpunkt 30 der Kippbewegungen liegt bevorzugt auf der von den Schenkeln 28 abgewandten Seite des Steges 26 bzw. der Stegabschnitte 26', 26". Mit dieser von den Schenkeln 28 abgewandten Stegfläche kann eine jeweilige allgemein U-förmige Klammer 24 dann beispielsweise auf einem Träger, zum Beispiel Trägerplatte, abgestützt sein.

Es wird somit eine sehr stabile Halterung für das Schwinggebilde des Ultraschallsystems erreicht. Die Halterung greift im Schwingungsknoten der in der Sonotrode erzeugten Longitudinalschwingung an der Sonotrode an und wird dort verspannt. Die dort, d.h. im Bereich der freien Schenkelenden auftretende Querdehnungsbewegung der Sonotrode bedingt ein Mitbewegen der jeweiligen allgemein U-förmigen Klammer in Form einer Transversalschwingung. Durch eine entsprechende Formgebung bzw. Ausgestaltung der Klammer entsteht an deren Fuß oder Steg eine Kippbewegung. Die jeweilige allgemein U-förmige Klammer kann im Knotenpunkt dieser Kippbewegung, der insbesondere auf der den Schenkeln gegenüberliegenden Endfläche des Steges liegen kann, beispielsweise an einem Träger, z.B. einer Trägerplatte, fixiert werden.

Unter mechanischer Belastung treten allenfalls geringe Formänderungen der allgemein U-förmigen Klammer auf. Zudem ist ein einfaches Austauschen eines jeweiligen Schwinggebildes oder von Teilen dieses Schwinggebildes aus einem Verbund möglich.

Es ergibt sich insgesamt eine sehr stabile Halterung des Schwinggebildes, womit eine hohe Betriebssicherheit erreicht wird.

Mit dem erfindungsgemäßen Sonotrodenhalterungssystem können die das Schwinggebilde tragenden Teile massiver ausgelegt werden, womit die Halterung robuster wird. Bevorzugt wird eine jeweilige allgemein U-förmige Klammer im Knotenpunkt der Kippschwingung gelagert.

### Bezugszeichenliste

- 10: Ultraschallsystem
- 12: Sonotrode
- 14: Konverter
- 16: Amplitudentransformationsstück
- 18: Schwinggebilde
- 20: Amboss
- 22: Sonotrodenhalterungssystem
- 24: allgemein U-förmige Klammer
- 26: Steg
- 26': Stegabschnitt
- 26": Stegabschnitt
- 28: Schenkel
- 28': freies Schenkelende
- 30: Knotenpunkt
- 32: Kerbe
- 34: Ansatz
- 36: Aussparung
- 38: Längsseiten
- 40: Kontaktseite
- 42: der Kontaktseite gegenüberliegende Seite
- 44: Zwischenraum

## Patentansprüche

1. Sonotrodenhalterungssystem (22) mit wenigstens einer an einem Träger abstützbaren allgemein U-förmigen Klammer (24), die einen Steg (26) und zwei Schenkel (28) umfasst, die jeweils um einen im Stegbereich vorgesehenen Knotenpunkt (30) federnd kippbar sind und zwischen die eine Ultraschall-Sonotrode (12) einspannbar ist, wobei bei eingespannter Sonotrode (12) zumindest die freien Enden (28') der Schenkel (28) an dieser Sonotrode (12) anliegen und die Klammer (24) im Stegbereich an dem Träger abstützbar ist.

2. Sonotrodenhalterungssystem nach Anspruch 1,
**dadurch gekennzeichnet,**
**dass** die freien Enden (28') der Schenkel (28) einer jeweiligen allgemein U-förmigen Klammer (24) jeweils mit einer Kerbe (32) versehen sind, in die bei eingespannter Sonotrode (12) ein an der Sonotrode (12) vorgesehener Ansatz (34) eingreift.

3. Sonotrodenhalterungssystem nach Anspruch 1,
**dadurch gekennzeichnet,**
**dass** die freien Enden (28') der Schenkel (28) einer jeweiligen allgemein U-förmigen Klammer (24) jeweils mit einem Ansatz versehen sind, der bei eingespannter Sonotrode (12) in eine Kerbe der Sonotrode (12) eingreift.

4. Sonotrodenhalterungssystem nach Anspruch 1 oder 2,
**dadurch gekennzeichnet,**
**dass** die jeweils zusammenwirkenden Ansätze (34) und Kerben (32) so bemessen sind, dass die bei eingespannter Sonotrode (12) auftretenden Kippbewegungen der Schenkel (28) um den Knotenpunkt (30) nicht behindert werden.

5. Sonotrodenhalterungssystem nach einem der vorhergehenden Ansprüche,
**dadurch gekennzeichnet,**
**dass** eine jeweilige allgemein U-förmige Klammer (24) im Knotenpunkt (30) der Kippbewegungen an dem Träger abstützbar ist.

6. Sonotrodenhalterungssystem nach einem der vorhergehenden Ansprüche,
**dadurch gekennzeichnet,**
**dass** im Stegbereich einer jeweiligen allgemein U-förmigen Klammer (24) die Kippbewegungen der Schenkel (28) unterstützende Aussparungen (36) vorgesehen sind.

7. Sonotrodenhalterungssystem nach einem der vorhergehenden Ansprüche,
**dadurch gekennzeichnet,**
**dass** der Steg (26) einer jeweiligen allgemein U-förmigen Klammer (24) in zwei jeweils einem der beiden Schenkeln (28) zugeordnete Stegabschnitte (26', 26") unterteilt ist und die Stegabschnitte (26', 26") zur Bildung der U-förmigen Klammer (24) insbesondere lösbar miteinander verbindbar sind.

8. Sonotrodenhalterungssystem nach Anspruch 7,
**dadurch gekennzeichnet,**
**dass** in jedem Stegabschnitt (26', 26") jeweils eine die Kippbewegung des zugeordneten Schenkels (28) unterstützende Aussparung (36) vorgesehen ist.

9. Sonotrodenhalterungssystem nach einem der vorhergehenden Ansprüche,
**dadurch gekennzeichnet,**
**dass** die freien Enden (28') der Schenkel (28) einer jeweiligen allgemein U-förmigen Klammer (24) im Schwingungsknoten der in der Sonotrode (12) erzeugten Longitudinalschwingung an der Sonotrode (12) anliegen bzw. mit dieser in Eingriff treten.

10. Vorrichtung zum Siegeln, Verbinden, Trennen, Perforieren und/oder Prägen von Materialien wie insbesondere Kunststoffen, Folien, Vliesen, Geweben/Textilien und/oder Papier, mit einem Ultraschallsystems (10), das wenigstens ein eine Sonotrode (12) und einen Konverter (14) aufweisendes Schwinggebilde (18), einen den Konverter (14) anregenden Ultraschallgenerator, einen der Sonotrode (12) gegenüberliegenden Amboss (20) sowie ein der Sonotrode (12) zugeordnetes Sonotrodenhalterungssystem (22) nach einem der vorhergehenden Ansprüche umfasst, wobei die freien Enden (28') der Schenkel (28) einer jeweiligen allgemein U-förmigen Klammer (24) bevorzugt im Schwingungsknoten der in der Sonotrode (12) erzeugten Longitudinalschwingung an der Sonotrode (12) anliegen bzw. mit dieser in Eingriff treten.
